# EUROPEAN PATENT SPECIFICATION

(11) **EP 0 669 157 B1**
(45) Date of publication and mention of the grant of the patent: **18.10.2000**
(21) Application number: 95102595.6
(22) Date of filing: 23.02.1995
(51) Int. Cl.: B01D 53/94, B01J 23/56, B01J 37/02

(54) **Catalyst and process for purifying exhaust gases**
Katalysator und Verfahren zur Reinigung von Abgasen
Catalyseur et procédé pour purifier des gaz d'échappement

(30) Priority: 23.02.1994 JP 2532694
(43) Date of publication of application: 30.08.1995
(73) Proprietor: TOYOTA JIDOSHA KABUSHIKI KAISHA, Aichi-ken 471-8571 (JP); CATALER INDUSTRIAL CO., LTD., Ogasa-gun, Shizuoka-ken (JP)
(72) Inventor: Miyoshi, Naoto, c/o Toyota Jidosha K.K., Toyota-shi, Aichi-ken (JP); Tanizawa, Tuneyuki, c/o Toyota Jidosha K.K., Toyota-shi, Aichi-ken (JP); Kasahara, Koichi, c/o Cataler Ind. Co. Ltd., Ogasa-gun, Shizuoka-ken (JP); Tateishi, Syuji, c/o Cataler Ind. Co. Ltd., Ogasa-gun, Shizuoka-ken (JP)
(74) Representative: Winter, Brandl, Fürniss, Hübner, Röss, Kaiser, Polte Partnerschaft

(56) References cited:
- EP-A- 0 170 841
- EP-A- 0 171 151
- EP-A- 0 462 593
- EP-A- 0 562 516
- EP-A- 0 613 714

## Description

### BACKGROUND OF THE INVENTION

### Field of the Invention

The present invention relates to a catalyst for purifying exhaust gases. More particularly, it relates to the catalyst which can efficiently purify nitrogen oxides (NOₓ) in the exhaust gases whose oxygen concentrations are at the stoichiometric point or more than required for oxidizing carbon monoxide (CO) and hydrocarbons (HC) therein.

### Description of Related Art

As catalysts for purifying automotive exhaust gases, there have been employed 3-way catalysts so far which oxidize CO and HC and reduce NOₓ to purify the exhaust gases. For example, the 3-way catalysts have been known widely which comprise a heat resistant honeycomb-shaped monolithic support formed of cordierite and having cellular walls, a porous layer formed of gamma-alumina and disposed on the cellular walls, and a noble metal catalyst ingredient selected from the group consisting of Pt, Pd and Rh and loaded on the porous layer.

The purifying performance of the 3-way catalysts for purifying exhaust gases depends greatly on the air-fuel ratio A/F of automotive engine. For instance, when the air-fuel weight ratio is larger than 14.6, i.e., when the fuel concentration is low (or on the fuel-lean side), the oxygen concentration is high in exhaust gases (hereinafter simply referred to as "fuel-lean atmospheres"). Accordingly, the oxidation reactions purifying CO and HC are active, but the reduction reactions purifying NOₓ are inactive. On the other hand, when the air-fuel ratio is smaller than 14.6, i.e., when the fuel concentration is high (or on the fuel-rich side), the oxygen concentration is low in exhaust gases (hereinafter simply referred to as "fuel-rich atmospheres"). Accordingly, the oxidation reactions are inactive, but the reduction reactions are active.

Moreover, when driving automobiles, especially when driving automobiles in urban areas, the automobiles are accelerated and decelerated frequently. Consequently, the air-fuel ratio varies frequently in the range of from the values adjacent to the stoichiometric point (or the theoretical air-fuel ratio: 14.6) to the fuel-rich side. In order to satisfy the low fuel consumption requirement during the driving conditions such as in the above-described urban areas, it is necessary to operate the automobiles on the fuel-lean side where the air-fuel mixture containing oxygen as excessive as possible is supplied to the engines. Hence, it has been desired to develop a catalyst which is capable of adequately purifying NOₓ even in exhaust gases of fuel-lean atmospheres.

In view of the aforementioned circumstances, the applicants et al. of the present invention proposed a novel catalyst in Japanese Unexamined Patent Publication (KOKAI) No. 5-317,652. In this catalyst, an alkaline-earth metal and Pt are loaded on a support including porous substance.

In accordance with the novel catalyst, in exhaust gases of fuel-lean atmospheres, NOₓ, which includes NO in an amount of about 90% by volume and the balance of NO₂ etc., is stored in the alkaline-earth metal elements. In particular, the NO is oxidized to NO₂ by the Pt. The resulting NO₂ is reacted with the alkaline-earth metal elements to produce alkaline-earth metal nitrates (e.g., barium nitrate, Ba(NO₃)₂), thereby being stored in the alkaline-earth metal elements. When the air-fuel mixture varies from the stoichiometric point to the fuel-rich atmospheres, the stored NO₂ is released from the alkaline-earth metal elements, and it is reacted with HC, CO and the like, included in exhaust gases, by the action of the Pt. Thus, NOₓ is reduced and purified to N₂. As a result, the catalyst exhibits superb NOₓ purifying performance in fuel-lean atmospheres.

In other words, NO components are present in a large amount in NOₓ included in exhaust gases, but they cannot be stored directly on the NOₓ storage component (e.g., an alkaline-earth metal, etc.). That is, after NO components are oxidized to NO₂ by the oxidation action of the noble metal catalyst ingredient (e.g., Pt, etc.), they are stored in the NOₓ storage component at last. Namely, the NOₓ storage component cannot store NOₓ therein by itself, and it can maximumly exhibit its NOₓ storing capability when it is disposed adjacent to the noble metal catalyst ingredient, such as Pt and the like.

When producing the above-described novel exhaust-gases-purifying catalyst, the noble metal catalyst ingredient, for example Pt, is loaded as follows: a honeycomb-shaped monolithic support is prepared which has cellular walls, and a porous layer formed of alumina or the like and disposed on the cellular walls. Then, the support is immersed into a platinum dinitrodiammine aqueous solution of low concentration. After a predetermined time has passed, the support is taken out of the aqueous solution, dried and calcinated.

Accordingly, the platinum dinitrodiammine aqueous solution is impregnated into the porous layer from the outer portion to the inner portion in this order, and at the same time it is impregnated into pores of the porous substance (e.g., alumina) in the outer and inner portions. The terms, "outer portion" and "inner portion," herein have the following meaning: when the porous layer coated on cellular walls of the support is viewed cross-sectionally, the "outer portion" denotes a part of the porous layer which contacts with exhaust gases flowing through the support, and the "inner portion" denotes a part of the porous layer which contacts with the support.

In the aforementioned Pt loading, the platinum dinitrodiammine aqueous solution of low concentration is prepared in a volume equal to or more than a water storing capability exhibited by the support. When the porous layer is constituted by alumina, the term, "water storing capability," herein means a total amount of the aqueous solution which can be filled in pores of the alumina itself. When Pt is loaded on the support in an amount of about 1 gram with respect to 1 liter of the support, and when a water storing capability of the support is about 0.2 liters with respect to 1 liter of the support, the aqueous solution contains Pt in an amount of about 5 grams with respect to 1 liter of the aqueous solution.

Thus, in the Pt loading described above, the Pt content is low and the aqueous solution is prepared in a large volume, Pt is included in low concentration in the aqueous solution, and it is very likely to be stored in the porous support formed of alumina, etc. Accordingly, a major portion of Pt is instantaneously stored and loaded on the outer portion, and substantially no Pt is present to be loaded on the inner portion. As a result, Pt is loaded in a distribution in which Pt is loaded more on the outer portion but less on the inner portion.

On the other hand, the alkaline-earth metal, for example Ba, is loaded as follows: the support with Pt loaded is immersed into an alkaline-earth metal compound (e.g., barium acetate) aqueous solution of high concentration. Then, the support is dried and calcinated while it holds the aqueous solution fully therein (e.g., in all of the pores of the alumina itself). In this type of alkaline-earth metal loading, the alkaline-earth metal is loaded virtually uniformly from the outer portion to the inner portion of the porous layer.

In the alkaline-earth metal loading, the barium acetate aqueous solution of high concentration is prepared in a volume substantially equal to the water storing capability exhibited by the support. When Ba is loaded on the support in an amount of about 0.2 moles with respect to 1 liter of the support, and when the support exhibited the same water storing capability as above, the aqueous solution contains barium being in the metallic form in an amount of about 137 grams (1 mole) with respect to 1 liter of the aqueous solution.

The Pt loading and the alkaline-earth metal loading are thus different from each other. The difference results in that Pt is loaded in an amount decreasing from the outer portion to the inner portion in the porous layer, and that the alkaline-earth metal is loaded uniformly from the outer portion to the inner portion in the porous layer.

All in all, in the outer portion of the porous layer, Pt and the alkaline-earth metal meet each other with high probability. On the contrary, in the inner portion of the porous layer, Pt and the alkaline-earth metal meet each other with low probability, and accordingly Pt is not present adjacent to the alkaline-earth element. As a result, the alkaline-earth metal loaded on the inner portion might not be able to exhibit its function at all. Namely, it might not store NOₓ thereon in exhaust gases of fuel-lean atmospheres. Specifically, since it might not store NOₓ thereon and it might not release NOₓ either, no reductive purifying action might arise. Thus, the novel exhaust-gases-purifying catalyst described above might not be improved in term of NOₓ purifying performance.

In order to solve the aforementioned problems, it is possible to increase the loading amount of Pt or to concentrate the concentration of Pt by reducing the volume of the water of the platinum dinitrodiammine aqueous solution. However, these countermeasures cannot be taken because of the following reasons. Namely, the increment in the Pt loading amount pushes up production cost inevitably. Since the volume reduction in the water does not result in the Pt content variation, and since Pt is likely to store in the porous layer invariably, Pt is still loaded on the outer portion of the porous layer in a large amount.

Document EP 0 613 174 relates to a catalyst and a process for purifying exhaust gases wherein the catalyst discloses at least two ingredients that are not uniformly dispersed.

Document EP 0 562 516 relates to a catalyst and method for purifying exhaust gas and discloses a composite oxide comprising barium oxide and lanthanum oxide. In this reference, platinum is supported only on an upper layer of an aluminium layer because a carrier is immersed in an aqueous solution.

Document EP 0 462 593 relates to a catalyst for purifying mainly Soluble Organic Fraction in the exhaust gas from diesel engines in low-temperature. The catalyst contains a refractory inorganic oxide, at least one noble metal selected from palladium and platinum, and rhodium in an upper layer portion of the catalyst-carrying layer. In Example 6 alumina was introduced in an aqueous solution with platinum and cerium components. A carrier was dipped in the processed above mixture with platinum and cerium components. Then, alumina was mixed with an aqueous solution with rhodium and lanthanum components. The carrier with the processed mixture with platinum and cerium components was dipped into the processed mixture with rhodium and lanthanum. The resultant carrier includes rhodium in the upper layer.

Document EP 0 170 841 discloses a three way catalyst having an insufficient purifying performance.

Document EP 0 171 151 relates to a three-way catalyst for lean exhaust systems containing rhodium, rare earth oxide and platinum and/or palladium, wherein rhodium is segregated from the rare earth oxide which prevents undesirable interactions between the rhodium and rare earth oxide. The platinum and/or palladium is dispersed on, for instance, gamma alumina stabilized with rare earth oxide or with alkaline earth oxide, wherein the presence of these oxide stabilizers retards the phase transition of higher surface area alumina to alpha alumina so that occlusion of the metal catalyst and resultant decreased catalytic activity is avoided. The rare earth oxide is effective for enhancing oxidation of carbon monoxide.

### SUMMARY OF THE INVENTION

The present invention has been developed in view of the aforementioned circumstances. It is therefore an object of the present invention to provide a catalyst in which an NOₓ storage component (e.g., an alkaline-earth metal, etc.) is loaded uniformly on a porous layer and a noble metal catalyst ingredient (e.g., Pt, etc.) is loaded so as to be disposed adjacent to the uniformly loaded NOₓ storage component, thereby fully utilizing the NOₓ storing and releasing capabilities of the NOₓ storage component which have not been exhibited adequately, and thereby eventually upgrading NOₓ purifying performance.

In accordance with the present invention, a catalyst according to claim 1 and processes according to claims 15, 18, 19 and 20 can solve the aforementioned problems. Further embodiments are dislosed in the subclaims. A catalyst for purifying exhaust gases illustrating the background of the present invention as well as aspects of the invention comprises:
a heat resistant support;
a porous layer coated on the heat resistant support;
a noble metal catalyst ingredient loaded on the porous layer; and
an NOₓ storage component including at least one member selected from the group consisting of alkaline-earth metals, rare-earth elements and alkali metals, and loaded on the porous layer;
the noble metal catalyst ingredient and the NOₓ storage component disposed adjacent to each other, and dispersed uniformly in the porous layer.

In such a catalyst, the noble metal catalyst ingredient and the NOₓ storage component are loaded so that they are disposed adjacent to each other, and that they are dispersed uniformly from the outer portion to the inner portion in the porous layer.

Hence, when atmospheres of exhaust gases are turned into fuel-lean atmospheres, NO, occupying a major portion of NOₓ in exhaust gases, is first oxidized to NO₂ by the noble metal catalyst ingredient at the outer portion of the porous layer, and simultaneously it is stored in the NOₓ storage component which is disposed adjacent to the noble metal catalyst ingredient.

Further, NO also goes into the inner portion of the porous layer, and thereby it is oxidized to NO₂ by the noble metal catalyst ingredient loaded similarly on the inner portion. At the same time, NO₂ is stored in the NOₓ storage component which is disposed adjacent to the noble metal catalyst ingredient.

Furthermore, when atmospheres of exhaust gases are varied from the stoichiometric point to fuel-rich atmospheres, the stored NO₂ is released from the NOₓ storage component. Then, the released NO₂ is reacted with HC and CO, which are present in exhaust gases, by the action of the noble metal catalyst ingredient which is disposed adjacent to the NOₓ storage component, and thereby it is reduced and purified to N₂.

In this way, it is possible to fully effect the NOₓ storing and releasing capabilities of the NOₓ storage component which is loaded not only on the outer portion of the porous layer but also on the inner portion thereof. Accordingly, the catalyst can exhibit high NOₓ conversion.

In addition, it is preferable to uniformly load at least one of Pt and Pd from the outer portion to the inner portion in the porous layer, and to further load Rh on the outer portion in a large amount. This optional arrangement is developed based on the following reasons: Rh is superior to Pt or Pd in terms of reductive purifying performance. When atmospheres of exhaust gases are varied from the stoichiometric point to fuel-rich atmospheres, the reduction reactions between NOₓ (present in exhaust gases) and HC or CO (present in exhaust gases), and the reduction reactions between NO₂ (released from the NOₓ storage component) between HC or CO (present in exhaust gases) can be facilitated by loading Rh on the outer portion of the porous layer where Rh contacts with NOₓ, HC and CO with high probability.

As for the heat resistant support, it is possible to select at least one member from the group consisting of a monolithic support formed of cordierite and a metallic support.

As for the porous layer, it is possible to select at least one member from the group consisting of alumina, zeolite, zirconia, silica-alumina, silica and the combinations thereof.

As for the noble metal catalyst ingredient, it is possible to select at least one element from the group consisting of Pt, Rh and Pd.

As for the alkaline-earth metals constituting the NOₓ storage component, it is possible to select at least one alkaline-earth metal from the group consisting of barium (Ba), strontium (Sr) and calcium (Ca).

As for the rare-earth elements constituting the NOₓ storage component, it is possible to select at least one rare-earth element from the group consisting of lanthanum (La), yttrium (Y) and cerium (Ce). Unless otherwise specified, the term, "rare-earth elements," herein includes not only the chemical elements with atomic numbers 58 through 71, but also ₃₉Y and ₅₇La.

As for the alkali metals constituting the NOₓ storage component, it is possible to select at least one alkali metal from the group consisting of lithium (Li), potassium (K) and sodium (Na).

As for the loading amount of the noble metal catalyst ingredient, it is preferred to load the noble metal catalyst ingredient in an amount of from 0.1 to 10.0 grams, further preferably from 0.5 to 3.0 grams, with respect to 1 liter of the heat resistant support. When at least two of the noble metal catalyst ingredients are loaded combinedly, they are preferably loaded combinedly in a combined amount of from 0.1 to 10.0 grams, further preferably from 0.5 to 3.0 grams, with respect to 1 liter of the heat resistant support. When the loading amount is less than 0.1 gram with respect to 1 liter of the heat resistant support, the resulting catalysts might not exhibit satisfactory catalytic activity. When the loading amount is more than 10.0 grams with respect to 1 liter of the heat resistant support, the grain growth of noble metal catalyst ingredients is facilitated by increasing the loading amount of them, and such loading does not contribute to the improvement of the catalytic activity in the resulting catalysts but pushes up the production cost of the resulting catalysts. In particular, when the loading amount falls in a range of from 0.5 to 3.0 grams with respect to 1 liter of the heat resistant support, such loading amount is preferable in view of the catalytic activity in the present catalyst and the production cost of the present catalyst.

As for the loading amount of the NOₓ storage component, it is preferred to load the NOₓ storage component in an amount of from 0.05 to 10.0 moles, further preferably from 0.05 to 1.0 mole, with respect to 1 liter of the heat resistant support. When at least two of the NOₓ storage components are loaded combinedly, they are preferably loaded combinedly in a combined amount of from 0.05 to 10.0 moles, further preferably from 0.05 to 1.0 mole, with respect to 1 liter of the heat resistant support. When the loading amount is less than 0.05 moles with respect to 1 liter of the heat resistant support, the resulting catalysts might not exhibit sufficient NOₓ purifying performance. When the loading amount is more than 10.0 moles with respect to 1 liter of the heat resistant support, such a loading amount might decrease the surface area of the porous layer.

Thus, when the exhaust gases are of fuel-lean atmospheres, the reductive purifying capability of the noble metal catalyst ingredient loaded on the inner portion of the porous layer and the NOₓ storing capability of the NOₓ storage component loaded thereon are added respectively to the reductive purifying capability of the noble metal catalyst ingredient loaded on the outer portion and the NOₓ storing capability of the NOₓ storage component loaded thereon. Likewise, when the atmospheres of the exhaust gases are varied from the stoichiometric point to fuel-rich atmospheres, the reductive purifying capability of the noble metal catalyst ingredient loaded on the inner portion and the NOₓ releasing capability of the NOₓ storage component loaded thereon are added respectively to the reductive purifying capability of the noble metal catalyst ingredient loaded on the outer portion and the NOₓ releasing capability of the NOₓ storage component loaded thereon. Therefore, the exhaust-gases-purifying catalyst can be improved in terms of NOₓ conversion.

In addition, when Rh is loaded on the outer portion of the porous layer, the present exhaust-gases-purifying catalyst can be further enhanced in terms of NOₓ conversion.

### BRIEF DESCRIPTION OF THE DRAWINGS

A more complete appreciation of the present invention and many of its advantages will be readily obtained as the same becomes better understood by reference to the following detailed description when considered in connection with the accompanying drawings and detailed specification, all of which forms a part of the disclosure:
Figure 1 is an enlarged cross-sectional view on a major portion of an exhaust-gases-purifying catalyst of a preferred embodiment according to the present invention; and
Figure 2 is an enlarged cross-sectional view on a major portion of an exhaust-gases-purifying catalyst of another preferred embodiment according to the present invention.

### DETAILED DESCRIPTION OF THE PREFERRED EMBODIMENTS

Having generally described the present invention, a further understanding can be obtained by reference to the specific preferred embodiments which are provided herein for purposes of illustration only and are not intended to limit the scope of the appended claims.

### First Preferred Embodiment

First of all, an alumina powder having an average particle diameter of 10 micrometers was added to a platinum dinitrodiammine aqueous solution to mix therewith. After stirring the mixture, the alumina powder was dried and calcinated, thereby preparing an alumina powder with Pt loaded thereon.

Moreover, the resulting alumina powder with Pt loaded was added to a barium acetate aqueous solution to mix therewith. After stirring the mixture, the alumina powder was dried and calcinated, thereby preparing an alumina powder with Pt and Ba loaded thereon.

Then, 500 grams of the alumina powder with Pt and Ba loaded, 150 c.c. of water, and 350 grams of alumina sol containing alumina in an amount of 10% by weight were stirred to mix, thereby preparing a slurry for coating.

Finally, a plurality of honeycomb-shaped monolithic supports having a volume of 1.3 liters and formed of cordierite were immersed into the slurry. After taking each of the supports out of the slurry, each of them was blown to blow away the slurry in excess. Thereafter, each of the supports was dried at 80 °C for 1 hour, and each of them was calcinated at 500 °C for 1 hour, thereby producing exhaust-gases-purifying catalysts No. 1 of the First Preferred Embodiment. The process for loading Pt and Ba according to the First Preferred Embodiment will be hereinafter referred to as the loading process "A."

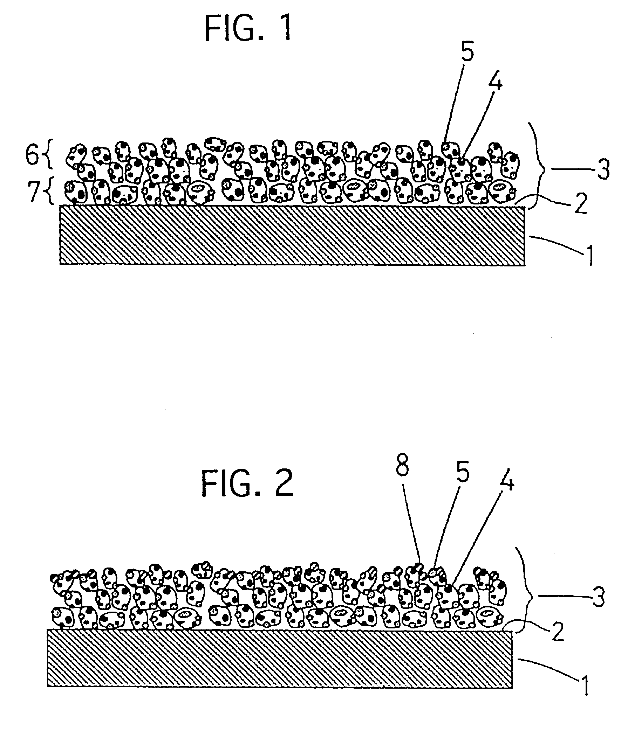

In Figure 1, there is illustrated an enlarged cross-sectional view on a major portion of exhaust-gases-purifying catalyst No. 1 of the First Preferred Embodiment. This exhaust-gases-purifying catalyst No. 1 comprises a support 1 having a cellular wall 2, a porous layer 3 coated on the surface of the cellular wall 2, and Pt and Ba designated, respectively, at 4 and 5. The Pt (designated at 4) and Ba (designated at 5) are loaded on the porous layer 3 and dispersed uniformly therein.

In exhaust-gases-purifying catalyst No. 1, the porous layer 3 was formed in an amount of 100 grams with respect to 1 liter of the support 1. As summarized in Table 1 below, in exhaust-gases-purifying catalyst No. 1, Pt was loaded in an amount of 1.0 gram with respect to 1 liter of the support, and Ba was loaded in an amount of 0.2 moles with respect to 1 liter of the support.

Further, as set forth in Table 1, exhaust-gases-purifying catalysts Nos. 2, 3, 6 and 7 of the First Preferred Embodiment were similarly produced by substituting the NOₓ storage components and the noble metal catalyst ingredients for those of exhaust-gases-purifying catalyst No. 1 and by varying their loading amounts.

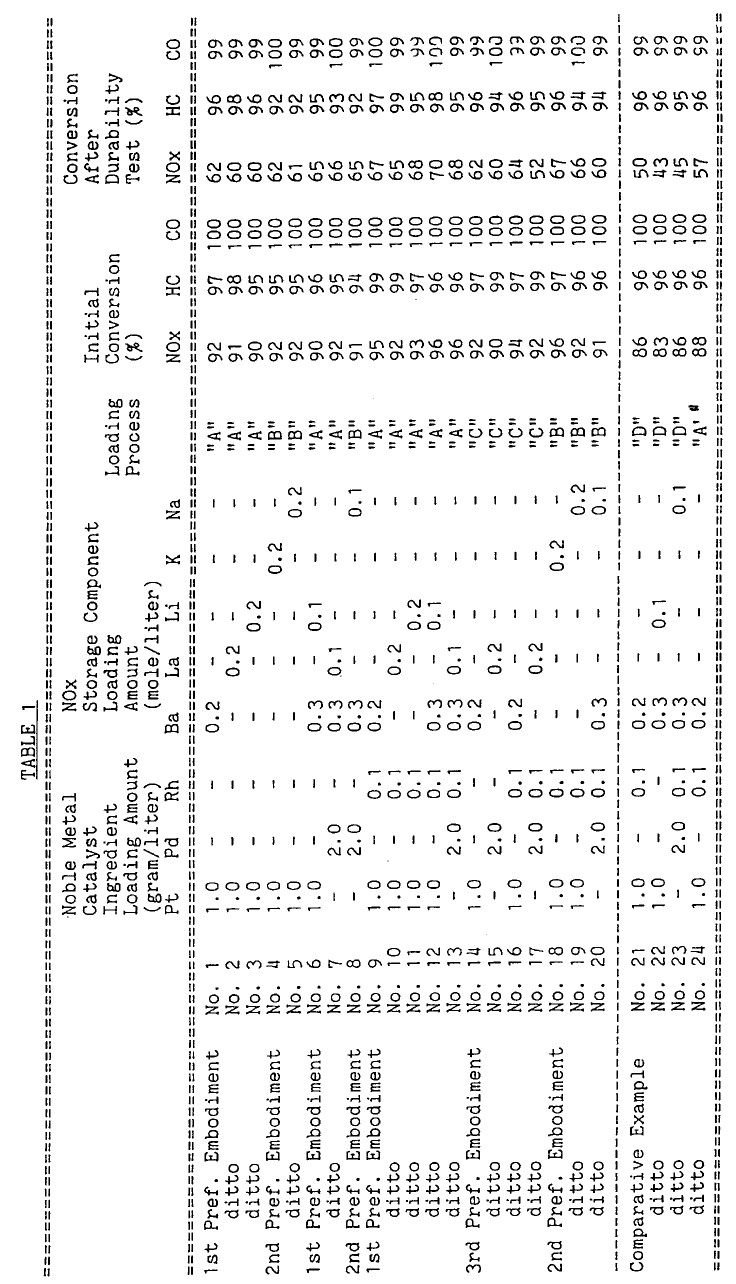

Furthermore, exhaust-gases-purifying catalysts Nos. 9 through 13 of the First Preferred Embodiment were produced in the following manner. That is, 5 exhaust-gases-purifying catalysts of the First Preferred Embodiment (e.g., exhaust-gases-purifying catalysts Nos. 1, 2, 3, 6 and 7) were immersed into a rhodium nitrate aqueous solution for 1 hour. After taking each of the catalysts out of the solution, each of them was blown to blow away the solution in excess. Thereafter, each of the catalysts was dried at 80 °C for 1 hour, and each of them was calcinated at 250 °C for 1 hour, thereby producing exhaust-gases-purifying catalysts Nos. 9 through 13.

Thus, as illustrated in Figure 2, Rh (designated at 8) is stored and loaded on an outer portion 6 of the porous layer 3 in exhaust-gases-purifying catalysts Nos. 9 through 13 of the First Preferred Embodiment. Figure 2 schematically illustrates an enlarged cross-sectional view on a major portion of exhaust-gases-purifying catalysts Nos. 9 through 13.

### Second Preferred Embodiment

First of all, 500 grams of an alumina powder, 150 c.c. of water, and 350 grams of alumina sol containing alumina in an amount of 10% by weight were stirred to mix, thereby preparing a slurry for coating.

Then, a plurality of honeycomb-shaped supports having a volume of 1.3 liters and formed of cordierite were immersed into the slurry. After taking each of the supports out of the slurry, each of them was blown to blow away the slurry in excess. Thereafter, each of the supports was dried at 80 °C for 1 hour, and each of them was calcinated at 500 °C for 1 hour, thereby forming a porous layer thereon.

Finally, predetermined amounts of platinum dinitrodiammine and potassium nitrate were dissolved into distilled water which were prepared in a volume substantially equal to the water adsorption amount exhibited by the support, thereby preparing a mixed solution for soaking. Each of the supports having the porous layer was soaked with the mixed solution. Thereafter, each of the supports was dried at 80 °C for 1 hour, and each of them was calcinated at 250 °C for 1 hour, thereby producing exhaust-gases-purifying catalysts No. 4 of the Second Preferred Embodiment.

In this loading process, the dinitrodiammine and the potassium nitrate were stored into the pores of the porous layer by using the mixed solution of high concentration. Accordingly, the dinitrodiammine and the potassium nitrate could be dispersed substantially uniformly in the porous layer. The process for loading Pt and K according to the Second Preferred Embodiment will be hereinafter referred to as the loading process "B."

Further, as set forth in Table 1, exhaust-gases-purifying catalysts Nos. 5 and 8 of the Second Preferred Embodiment were similarly produced by substituting the NOₓ storage components and the noble metal catalyst ingredients for those of exhaust-gases-purifying catalyst No. 4 and by varying their loading amounts.

Furthermore, exhaust-gases-purifying catalysts Nos. 18 through 20 of the Second Preferred Embodiment were produced in the following manner. That is, 3 exhaust-gases-purifying catalysts of the Second Preferred Embodiment (e.g., exhaust-gases-purifying catalysts Nos. 4, 5 and 8) were immersed into a rhodium nitrate aqueous solution for 1 hour. After taking each of the catalysts out of the solution, each of them was blown to blow away the solution in excess. Thereafter, each of the catalysts was dried at 80 °C for 1 hour, and each of them was calcinated at 250 °C for 1 hour, thereby storing and loading Rh on outer portions of the porous layer. Three exhaust-gases-purifying catalysts, i.e., Nos. 18 through 20, were thus produced.

### Third Preferred Embodiment

First of all, an alumina powder having an average particle diameter of 10 micrometers was added to a platinum dinitrodiammine aqueous solution to mix therewith. After stirring the mixture, the alumina powder was dried and calcinated, thereby preparing an alumina powder with Pt loaded thereon.

Moreover, 500 grams of the resulting alumina powder with Pt loaded, 150 c.c. of water, and 350 grams of alumina sol containing alumina in an amount of 10% by weight were stirred to mix, thereby preparing a slurry for coating.

Then, a plurality of honeycomb-shaped monolithic supports having a volume of 1.3 liters and formed of cordierite were immersed into the slurry. After taking each of the supports out of the slurry, each of them was blown to blow away the slurry in excess. Thereafter, each of the supports was dried at 80 °C for 1 hour, and each of them was calcinated at 500 °C for 1 hour, thereby forming a porous support on which Pt was loaded uniformly.

Finally, a barium acetate aqueous solution was prepared. The solution was prepared in a volume which was substantially equal to the water adsorption amount exhibited by the support, and it included Ba in a predetermined amount. Each of the supports having the porous layer was soaked with the solution. Thereafter, each of the supports was dried at 80 °C for 1 hour, and each of them was calcinated at 500 °C for 1 hour, thereby producing exhaust-gases-purifying catalysts No. 14 of the Third Preferred Embodiment. The process for loading Pt and Ba according to the Third Preferred Embodiment will be hereinafter referred to as the loading process "C."

Likewise, as set forth in Table 1, exhaust-gases-purifying catalysts Nos. 15 through 17 of the Third Preferred Embodiment were similarly produced by substituting the NOₓ storage components and the noble metal catalyst ingredients for those of exhaust-gases-purifying catalyst No. 14 and by varying their loading amounts.

### Comparative Example

First of all, 500 grams of an alumina powder, 150 c.c. of water, and 350 grams of alumina sol containing alumina in an amount of 10% by weight were stirred to mix, thereby preparing a slurry for coating.

Then, a plurality of honeycomb-shaped supports having a volume of 1.3 liters and formed of cordierite were immersed into the slurry. After taking each of the supports out of the slurry, each of them was blown to blow away the slurry in excess. Thereafter, each of the supports was dried at 80 °C for 1 hour, and each of them was calcinated at 500 °C for 1 hour, thereby forming a porous layer thereon.

Then, each of the supports having the porous layer was immersed into a 1.5 liter mixed solution containing platinum dinitrodiammine and rhodium nitrate for 1 hour. After taking each of the supports out of the mixed solution, each of them was blown to blow away the mixed solution in excess. Thereafter, each of the supports was dried at 80 °C for 1 hour, and each of them was calcinated at 500 °C for 1 hour, thereby loading Pt and Rh thereon.

Finally, each of the supports with Pt and Rh loaded thereon was soaked with a barium acetate aqueous solution in the same manner as the Third Preferred Embodiment. Thereafter, each of the supports was dried at 80 °C for 1 hour, and each of them was calcinated at 500 °C for 1 hour, thereby producing exhaust-gases-purifying catalysts No. 21 of Comparative Example. The process for loading Pt, Rh and Ba according to Comparative Example will be hereinafter referred to as the loading process "D."

Likewise, as set forth in Table 1, exhaust-gases-purifying catalysts Nos. 22 and 23 of Comparative Example were similarly produced by substituting the NOₓ storage components and the noble metal catalyst ingredients for those of exhaust-gases-purifying catalyst No. 21 and by varying their loading amounts.

In addition, except that rhodium nitrate was first loaded on an alumina powder by using a mixed aqueous solution containing platinum dinitrodiammine and rhodium nitrate, exhaust-gases-purifying catalysts No. 24 of Comparative Example were prepared in the same manner as exhaust-gases-purifying catalysts No. 9 of the First Preferred Embodiment.

### Examination and Evaluation

Each of catalysts Nos. 1 through 20 of the First through Third Preferred Embodiments as well as catalysts Nos. 21 through 24 of Comparative Example was subjected to the EPMA (i.e., electron probe microanalysis) in order to investigate how the noble metal catalyst ingredients and the NOₓ storage components were distributed in the porous layer. As a result, in catalysts Nos. 1 through 20 of the First through Third Preferred Embodiments, the noble metal catalyst ingredients (e.g., Pt and Pd) and the NOₓ storage components were distributed and dispersed uniformly in the porous layers, and Rh was largely distributed in the outer portions. Thus, in catalysts Nos. 1 through 20 of the First through Third Preferred Embodiments, the noble metal catalyst ingredients and the NOₓ storage components were loaded in either of the states illustrated in Figures 1 and 2. On the other hand, in catalysts Nos. 21 through 24 of Comparative Example, although the NOₓ storage components were distributed uniformly in the porous layers, all of the noble metal catalyst ingredients (e.g., Pt, Pd and Rh) were largely distributed in the outer portions to show deviated distributions.

Moreover, each of catalysts Nos. 1 through 20 of the First through Third Preferred Embodiments as well as catalysts Nos. 21 through 24 of Comparative Example was disposed in an exhaust line of an actual vehicle equipped with a lean burn engine. The lean burn engine had a displacement of 1.6 liters. The vehicle was driven in the urban area running mode, thereby examining the catalysts for the conversion of HC, CO and NOₓ. The results of the examination are summarized in the columns designated at "Initial Conversion" in Table 1.

After the aforementioned examination, each of catalysts Nos. 1 through 20 of the First through Third Preferred Embodiments as well as catalysts Nos. 21 through 24 of Comparative Example was subjected to a bench test on durability which utilized the same type of engine as above. Namely, each of them was disposed in an exhaust line of the engine, and then the engine was run at an air-fuel ratio A/F of 18 for 50 hours while adjusting the temperature of the exhaust gas introduced into them at 650 °C. After this bench test was over, each of them was again disposed in the exhaust line of the actual vehicle. The vehicle was driven in the same manner as described above, thereby examining the catalysts for the conversion of HC, CO and NOₓ. The results of the examination are summarized in the columns designated at "Conversion after Durability Test" in Table 1.

As can be appreciated from Table 1, catalysts Nos. 1 through 20 of the First through Third Preferred Embodiments were improved over catalysts Nos. 21 through 24 of Comparative Example in terms of the NOₓ conversions. Thus, it is apparent that, by loading a noble metal catalyst ingredient and an NOₓ storage component so as to uniformly distribute in a porous layer, an exhaust-gases-purifying catalyst can be upgraded in terms of the initial NOₓ conversion and the NOₓ conversion after the durability test.

Moreover, it is obvious that, by loading Rh on an outer portion of a porous layer, an exhaust-gases-purifying catalyst can be further enhanced in terms of the NOₓ conversions.

## Claims

1. A catalyst for purifying exhaust gases, comprising:
a heat resistant support;
a porous layer coated on said heat resistant support;
a noble metal catalyst ingredient, loaded on said porous layer and selected from the group consisting of Pt or Pd and Rh, for oxidizing NO in the exhaust gas to NO₂ and for reacting NO₂ with HC, CO and the like in the exhaust gas; and
an NOₓ storage component including at least one member selected from the group consisting of alkaline-earth metals, rare-earth elements excluding cerium and alkali metals, and loaded on said porous layer in an amount of from 0.05 to 10.0 moles with respect to 1 liter of said heat resistant support;
wherein
said porous layer has an inner portion contacting with said heat resistant support and an outer portion disposed on the inner portion,
said noble metal catalyst ingredient and said NOₓ storage component are disposed adjacent to each other in order to meet each other with high probability,
said NOₓ storage component is dispersed uniformly in said porous layer,
at least one of Pt and Pd is dispersed uniformly from the outer portion to the inner portion in said porous layer and
Rh is loaded in a large amount on the outer portion of said porous layer with respect to the inner portion.

2. The catalyst according to Claim 1, wherein said heat resistant support includes at least one member selected from the group consisting of a monolithic support formed of cordierite and a metallic support.

3. The catalyst according to Claim 1, wherein said porous layer includes at least one member selected from the group consisting of alumina, zeolite, zirconia, silica-alumina, silica and the combinations thereof.

4. The catalyst according to Claim 1, wherein said NOₓ storage component is at least one alkaline-earth metal selected from the group consisting of barium (Ba), strontium (Sr) and calcium (Ca).

5. The catalyst according to claim 1, wherein said NOₓ storage component is at least one rare-earth element selected from the group consisting of lanthanum (La) and yttrium (Y).

6. The catalyst according to Claim 1, wherein said NOₓ storage component is at least one alkali metal selected from the group consisting of lithium (Li), potassium (K) and sodium (Na).

7. The catalyst according to Claim 1, wherein said NOₓ storage component is loaded in an amount which is effective to store nitrogen oxide (NOₓ) in exhaust gases whose oxygen concentrations are at the stoichiometric point or more than required for oxidizing carbon monoxide (CO) and hydrocarbons (HC).

8. The catalyst according to Claim 7, wherein said NOₓ storage component is loaded in amount of from 0.05 to 1.0 mole with respect to 1 liter of said heat resistant support.

9. The catalyst according to Claim 1, wherein at least two of said NOₓ storage components are loaded combinedly in a combined amount which is effective to store NOₓ in exhaust gases whose oxygen concentrations are at the stoichiometric point or more than required for oxidizing CO and HC.

10. The catalyst according to Claim 9, wherein at least two of said NOₓ storage components are loaded combinedly in a combined amount of from 0.05 to 10.0 moles with respect to 1 liter of said heat resistant support.

11. The catalyst according to Claim 10, wherein at least two of said NOₓ storage components are loaded combinedly in a combined amount of from 0.05 to 1.0 mole with respect to 1 liter of said heat resistant support.

12. The catalyst according to Claim 1, wherein said noble metal catalyst ingredient is loaded in an amount which is effective to purify NOₓ, CO and HC in exhaust gases whose oxygen concentrations are at the stoichiometric point or more than required for oxidizing CO and HC.

13. The catalyst according to Claim 12, wherein said noble metal catalyst ingredient is loaded in an amount of from 0.1 to 10.0 grams with respect to 1 liter of said heat resistant support.

14. The catalyst according to Claim 13, wherein said noble metal catalyst ingredient is loaded in an amount of from 0.5 to 3.0 grams with respect to 1 liter of said heat resistant support.

15. The catalyst according to Claim 1, wherein at least two of said elements are loaded combinedly in a combined amount which is effective to purify NOₓ, CO and HC in exhaust gases whose oxygen concentrations are at the stoichiometric point or more than required for oxidizing CO and HC.

16. The catalyst according to Claim 15, wherein at least two of said elements are loaded combinedly in a combined amount of from 0.1 to 10.0 grams with respect to 1 liter of said heat resistant support.

17. The catalyst according to Claim 16, wherein at least two of said elements are loaded combinedly in a combined amount of from 0.5 to 3.0 grams with respect to 1 liter of said heat resistant support.

18. Process for manufacturing a catalyst according to Claim 1, wherein, prior to coating said porous layer on said heat resistant support, at least one noble metal catalyst ingredient selected from the group consisting of Pt and Pd is loaded on said porous layer so as to uniformly disperse therein.

19. Process for manufacturing a catalyst according to Claim 1, wherein at least one noble metal catalyst ingredient selected from the group consisting of Pt and Pd is loaded on said porous layer by immersing said heat resistant support with said porous layer coated thereon into an aqueous solution of the noble metal catalyst ingredient which is prepared in a volume equal to or less than a water storing capability exhibited by said heat resistant support with said porous layer coated thereon, and by drying.

20. A process for purifying an exhaust gas from a lean burn engine comprising carbon monoxide, hydrocarbons and nitrogen oxides by bringing said exhaust gas from a lean burn engine into contact with an exhaust gas purifying catalyst comprising:
a heat resistant support;
a porous layer coated on said heat resistant support;
a noble metal catalyst ingredient loaded on said porous layer in an amount of 0.1 to 10.0 grams with respect to 1 liter of said heat resistant support; and
an NOx storage component including at least one member selected from the group consisting of alkaline-earth metals, rare-earth elements excluding cerium and alkali metals, and loaded on said porous layer in an amount of 0.05 to 10.0 moles with respect to 1 liter of said heat resistant support;
said noble metal catalyst ingredient and said NOx storage component being disposed adjacent to each other in order to meet each other with high probability, and being dispersed uniformly from the outer portion to the inner portion in said porous layer,
wherein
(1) under a fuel-lean atmosphere in which oxygen concentrations are at or above a stoichiometric point that is required for oxidizing components to be oxidized in said exhaust gas, nitrogen oxides in said exhaust gas are oxidized by said noble metal catalyst ingredient and are stored in said NOx storage component;
(2) under a [said] reduction atmosphere, when an air-fuel ratio is adjusted from fuel-lean to fuel-rich, providing a reduction atmosphere in which oxygen concentrations of said exhaust gas are less than said stoichiometric point, nitrogen oxides stored in said NOx storage component are released and chemically reduced by a reaction with hydrocarbons and carbon monoxide in said exhaust gas.

21. The process according to Claim 20, wherein said heat resistant support includes at least one member selected from the group consisting of a monolithic support formed of cordierite and a metallic support.

22. The process according to Claim 20, wherein said porous layer includes at least one member selected from the group consisting of alumina, zeolite, zirconia, silica-alumina, silica and the combinations thereof.

23. The process according to Claim 20, wherein said NOₓ storage component is at least one alkaline-earth metal selected from the group consisting of barium (Ba), strontium (Sr) and calcium (Ca).

24. The process according to claim 20, wherein said NOₓ storage component is at least one rare-earth element selected from the group consisting of lanthanum (La) and yttrium (Y).

25. The process according to Claim 1, wherein said NOₓ storage component is at least one alkali metal selected from the group consisting of lithium (Li), potassium (K) and sodium (Na).

26. The process according to Claim 20, wherein said NOₓ storage component is loaded in an amount which is effective to store nitrogen oxide (NOₓ) in exhaust gases whose oxygen concentrations are at the stoichiometric point or more than required for oxidizing carbon monoxide (CO) and hydrocarbons (HC).

27. The process according to Claim 26, wherein said NOₓ storage component is loaded in amount of from 0.05 to 1.0 mole with respect to 1 liter of said heat resistant support.

28. The process according to Claim 20, wherein at least two of said NOₓ storage components are loaded combinedly in a combined amount which is effective to store NOₓ in exhaust gases whose oxygen concentrations are at the stoichiometric point or more than required for oxidizing CO and HC.

29. The process according to Claim 28, wherein at least two of said NOₓ storage components are loaded combinedly in a combined amount of from 0.05 to 10.0 moles with respect to 1 liter of said heat resistant support.

30. The process according to Claim 29, wherein at least two of said NOₓ storage components are loaded combinedly in a combined amount of from 0.05 to 1.0 mole with respect to 1 liter of said heat resistant support.

31. The process according to claim 20, wherein said noble metal catalyst ingredient is at least one element selected from the group consisting of Pt, Rh and Pd.

32. The process according to Claim 20, wherein said noble metal catalyst ingredient is loaded in an amount which is effective to purify NOₓ, CO and HC in exhaust gases whose oxygen concentrations are at the stoichiometric point or more than required for oxidizing CO and HC.

33. The process according to Claim 20, wherein said noble metal catalyst ingredient is loaded in an amount of from 0.5 to 3.0 grams with respect to 1 liter of said heat resistant support.

34. The process according to Claim 20, wherein at least two of said elements are loaded combinedly in a combined amount which is effective to purify NOₓ, CO and HC in exhaust gases whose oxygen concentrations are at the stoichiometric point or more than required for oxidizing CO and HC.

35. The process according to Claim 34, wherein at least two of said elements are loaded combinedly in a combined amount of from 0.1 to 10.0 grams with respect to 1 liter of said heat resistant support.

36. The process according to Claim 35, wherein at least two of said elements are loaded combinedly in a combined amount of from 0.5 to 3.0 grams with respect to 1 liter of said heat resistant support.

37. The process according to claim 20, in which the noble metal catalyst ingredient is selected from Pt and Pd wherein said porous layer has an inner portion contacting with said heat resistant support and an outer portion disposed on the inner portion, [at least one of Pt and Pd is dispersed uniformly from the outer portion to the inner portion in said porous layer,] and Rh is loaded in a large amount on the outer portion with respect to the inner portion of said porous layer.

## Patentansprüche

1. Katalysator zum Reinigen von Abgasen, der aufweist:
einen hitzebeständigen Träger,
eine poröse Schicht, die auf den hitzebeständigen Träger aufgetragen ist,
einen Edelmetallkatalysator-Bestalldteill der auf die poröse Schicht aufgebracht ist und aus der Gruppe aus Pt oder Pd und Rh zum Oxidieren von NO im Abgas zu NO₂ und für die Reaktion von NO₂ mit HC, CO und ähnlichem im Abgas ausgewählt wurde, und
eine NOₓ-Speicherkomponente, die zumindest ein Element aufweist, das aus der Gruppe aus Erdalkalimetallen, Seltenerdelementen mit der Ausnahme von Zer und Alkalimetallen ausgewählt wurde und auf die poröse Schicht in einer Menge von 0,05 bis 10,0 mol bezüglich eines Liters des hitzebeständigen Trägers aufgebracht ist,
wobei die poröse Schicht einen Innenabschinitt, der mit dem hitzebeständigen Träger in Berührung steht, und einen Anßenabschnitt, der sich auf dem Innenabschnitt befindet, aufweist,
wobei der Edelmetallkatalysator-Bestandteil und die NOₓ-Speicherkomponente benachbart zueinander angeordnet sind, um einander mit hoher Wahrscheinlichkeit zu treffen,
wobei die NOₓ-Speicherkomponente in der porösen Schicht gleichmäßig dispergiert ist,
zumindest eines der Elemente Pt und Pd vom Außenabschnitt zum Innenabschnitt in der porösen Schicht gleichmäßig dispergiert ist, und
Rh auf den Außenabschnitt der porösen Schicht in großer Menge bezüglich dem Innenabschnitt aufgebracht ist.

2. Katalysator nach Anspruch 1, wobei der hitzebeständige Träger zumindest ein Element aufweist, das aus der Gruppe aus monolithischem Träger aus Cordierit und einem metallischen Träger ausgewählt wurde.

3. Katalysator nach Anspruch 1, wobei die poröse Schicht zumindest ein Element aufweist, das aus der Gruppe aus Aluminiumoxid, Zeolith, Zirkonium, Silika-Aluminiumoxid, Silika und Kombinationen von diesen ausgewählt wurde.

4. Katalysator nach Anspruch 1, wobei die NOₓ-Speicherkomponente zumindest ein Erdalkalimetall ist, das aus der Gruppe aus Barium (Ba), Strontium (Sr) und Kalzium (Ca) ausgewählt wurde.

5. Katalysator nach Anspruch 1, wobei die NOₓ-Speicherkomponenten zumindest ein Seltenerdelement ist, das aus der Gruppe aus Lanthan (La) und Yttrium (Y) ausgewählt wurde.

6. Katalysator nach Anspruch 1, wobei die NOₓ-Speicherkomponente zumindest ein Alkalimetall ist, das aus der Gruppe aus Lithium (Li), Kalium (K) und Natrium (Na) ausgewählt wurde.

7. Katalysator nach Anspruch 1, wobei die NOₓ-Speicherkomponente in einer Menge aufgebracht ist, die zum speichern von Stickstoffoxid (NOₓ) in den Abgasen wirksam sind, deren Sauerstoffkonzentrationen am stöchiometrischen Punkt oder auf einen Wert liegen, der höher ist, als es zum Oxidieren von Kohlenmonoxid (CO) und Kohlenwasserstoffen (HC) erforderlich ist.

8. Katalysator nach Anspruch 7, wobei die NOₓ-Speicherkomponente in einer Menge von 0,05 bis 1,0 mol bezüglich eines Liters des hitzebeständigen Trägers aufgebracht ist.

9. Katalysator nach Anspruch 1, wobei zumindest zwei der NOₓ-Speicherkomponenten kombiniert in einer kombinierten Menge aufgebracht sind, die zum Speichern von NOₓ in den Abgasen wirksam ist, deren Sauerstoffkonzentrationen am stöchiometrischen Punkt oder auf einen Wert liegen, der höher ist, als es zum Oxidieren von CO und HC erforderlich ist.

10. Katalysator nach Anspruch 9, wobei zumindest zwei der NOₓ-Speicherkomponenten kombiniert in einer kombinierten Menge von 0,05 bis 10,0 bezüglich eines Liters des hitzebeständigen Träger aufgebracht sind.

11. Katalysator nach Anspruch 10, wobei zumindest zwei der NOₓ-Speicherkomponenten kombiniert in einer kombinierten Menge von 0,05 bis 1,0 mol bezüglich eines Liters des hitzebeständigen Trägers aufgebracht sind.

12. Katalysator nach Anspruch 1, wobei der Edelmetallkatalysator-Bestandteil in einer Menge aufgebracht ist, die zum Reinigen bezüglich NOₓ, CO und HC in den Abgasen wirksam ist, deren Sauerstoffkonzentrationen am stöchiometrischen Punkt oder auf einen Wert liegen, der höher ist, als es zum Oxidieren von CO und HC erforderlich ist.

13. Katalysator nach Anspruch 12, wobei der Edelmetallkatalysator-Bestandteil in einer Menge von 0,1 bis 10 Gramm bezüglich eines Liters des hitzebeständigen Trägers aufgebracht ist.

14. Katalysator nach Anspruch 13, wobei der Edelmetallkatalysator-Bestandteil in einer Menge von 0,5 bis 3,0 Gramm bezüglich eines Liters des hitzebeständigen Trägers aufgebracht ist.

15. Katalysator nach Anspruch 1, wobei zumindest zwei der Elemente kombiniert in einer kombinierten Menge aufgebracht sind, die zum Reinigen bezüglich NOₓ, CO und HC in den Abgasen wirksam ist, deren Sauerstoffkonzentrationen am stöchiometrischen Punkt oder auf einen Wert liegen, der höher ist, als es zum Oxidieren von CO und HC erforderlich ist.

16. Katalysator nach Anspruch 15, wobei zumindest zwei der Elemente kombiniert in einer kombinierten Menge von 0,1 bis 10,0 Gramm bezüglich eines Liters des hitzebeständigen Trägers aufgebracht sind.

17. Katalysator nach Anspruch 16, wobei zumindest zwei der Elemente kombiniert in einer kombinierten Menge von 0,5 bis 3,0 Gramm bezüglich eines Liters des hitzebeständigen Trägers aufgebracht sind.

18. Verfahren zum Herstellen eines Katalysators nach Anspruch 1, wobei vor dem Beschichten des hitzebeständigen Trägers mit der porösen Schicht zumindest ein Edelmetallkatalysator-Bestandteil, der aus der Gruppe aus Pt und Pd ausgewählt wurde, auf die poröse Schicht aufgebracht wird, um in dieser gleichmäßig zu dispergieren.

19. Verfahren zum Herstellen eines Katalysators nach Anspruch 1, wobei zumindest ein Edelmetallkatalysator-Bestandteil, der aus der Gruppe aus Pt und Pd ausgewählt wurde, auf die poröse Schicht aufgebracht wird, indem der hitzebeständige Träger mit der aufgebrachten porösen Schicht in eine wäßrige Lösung des Edelmetallkatalysator-Bestandteils eingetaucht wird, die in eine Volumen zubereitet wird, das gleich der Wasserspeicherfähigkeit des hitzebeständigen Trägers mit der auf diesen aufgebrachten porösen Schicht oder weniger als diese ist, und indem eine Trocknung ausgeführt wird.

20. Verfahren zum Reinigen von Abgas eines Magermotors, das Kohlenmonoxid, Kohlenwasserstoffe und Stickstoffoxide aufweist, indem das Abgas eines Magermotors mit einem Abgasreinigungskatalysator in Berührung gebracht wird, der aufweist:
einen hitzebeständigen Träger,
eine poröse Schicht, die auf den hitzebeständigen Träger aufgebracht ist,
einen Edelmetallkatalysator-Bestandteil, der auf die poröse Schicht in einer Menge von 0,1 bis 10,0 Gramm bezüglich eines Liters des hitzebeständigen Trägers aufgebracht ist, und
eine NOₓ-Speicherkomponente mit zumindest einem Element, das aus der Gruppe aus Erdalkalimetallen, Seltenerdelementen mit der Ausnahme von Zer und Alkalimetallen ausgewählt wurde und auf die poröse Schicht in einer Menge von 0,05 bis 10,0 mol bezüglich eines Liters des hitzebeständigen Trägers aufgebracht ist,
wobei der Edelmetallkatalysator-Bestandteil und die NOₓ-Speicherkomponente benachbart zueinander angeordnet sind, um einander mit hoher Wahrscheinlichkeit zu treffen, und vom Außenabschnitt zum Innenabschnitt in der porösen Schicht gleichmäßig dispergiert sind,
wobei
(1) bei Mageratmosphäre, bei der die Sauerstoffkonzentrationen am stöchiometrischen Punkt, der zum Oxidieren der Oxidierkomponenten im Abgas erforderlich ist, oder oberhalb von diesem liegen, Stickstoffoxide im Abgas durch den Edelmetallkatalysator-Bestandteil oxidiert werden und in der NOₓ-Speicherkomponente gespeichert werden,
(2) unter einer Reduktionsatmosphäre, bei der ein Luft-Kraftstoff-Verhältnis von mager zu fett eingestellt wird, wodurch eine Reduktionsatmosphäre vorgesehen wird, bei der die Sauerstoffkonzentrationen des Abgases niedriger als der stöchiometrische Punkt liegen, Stickstoffoxide, die in der NOₓ-Speicherkomponente gespeichert sind, freigesetzt werden und durch Reaktion mit Kohlenwasserstoffen und Kohlenmonoxid im Abgas chemisch reduziert werden.

21. Verfahren nach Anspruch 20, wobei der hitzebeständige Träger zumindest ein Element aus der Gruppe aus monolithischem Träger aus Cordierit und metallischem Träger ausgewählt wurde.

22. Verfahren nach Anspruch 20, wobei die poröse Schicht zumindest ein Element aus der Gruppe aus Aluminiumoxid, Zeolith, Zirkonium, Silika-Aluminiumoxid, Silika und Kombinationen von diesen aufweist.

23. Verfahren nach Anspruch 20, wobei die NOₓ-Speicherkomponente zumindest ein Erdalkalimetall ist, das aus der Gruppe aus Barium (Ba), Strontium (Sr) und Kalzium (Ca) ausgewählt wurde.

24. Verfahren nach Anspruch 20, wobei die NOₓ-Speicherkomponente zumindest ein Seltenerdelement ist, das aus der Gruppe aus Lanthan (La) und Yttrium (Y) ausgewählt wurde.

25. Verfahren nach Anspruch 1, wobei die NOₓ-Speicherkomponente zumindest ein Alkalimetall ist, das aus der Gruppe aus Lithium (Li), Kalium (K) und Natrium (Na) ausgewählt wurde.

26. Verfahren nach Anspruch 20, wobei die NOₓ-Speicherkomponente in einer Menge aufgebracht wird, die zum Speichern von Stickstoffoxid (NOₓ) in Abgasen wirksam ist, deren Sauerstoffkonzentrationen am stöchiometrischen Punkt oder auf einen Wert liegen, der höher ist, als es zum Oxidieren von Kohlenmonoxid (CO) und Kohlenwasserstoffen (HC) erforderlich ist.

27. Verfahren nach Anspruch 26, wobei die NOₓ-Speicherkomponente in einer Menge von 0,05 bis 1,0 mol bezüglich eines Liters des hitzebeständigen Trägers aufgebracht ist.

28. Verfahren nach Anspruch 20, wobei zumindest zwei der NOₓ-Speicherkomponenten kombiniert in einer kombinierten Menge aufgebracht werden, die zum Speichern von NOₓ in den Abgasen wirksam ist, deren Sauerstoffkonzentrationen am stöchiometrischen Punkt oder auf einen Wert liegen, der höher ist, als es zum Oxidieren von CO und HC erforderlich ist.

29. Verfahren nach Anspruch 28, wobei zumindest zwei der NOₓ-Speicherkomponenten kombiniert in einer kombinierten Menge von 0,05 bis 10,0 mol bezüglich eines Liters des hitzebeständigen Trägers aufgebracht werden.

30. Verfahren nach Anspruch 29, wobei zumindest zwei der NOₓ-Speicherkomponenten kombiniert in einer kombinierten Menge von 0,05 bis 1 mol bezüglich eines Liters des hitzebeständigen Trägers aufgebracht werden.

31. Verfahren nach Anspruch 20, wobei der Edelmetallkatalysator-Bestandteil zumindest ein Element ist, das aus der Gruppe aus Pt, Rh und Pd ausgewählt wurde.

32. Verfahren nach Anspruch 20, wobei der Edelmetallkatalysator-Bestandteil in einer Menge aufgebracht wird, die zum Reinigen bezüglich NOₓ, CO und HC in Abgasen wirksam ist, deren Sauerstoffkonzentrationen am stöchiometrischen Punkt oder auf einen Wert liegen, der höher ist, als es zum Oxidieren von CO und HC erforderlich ist.

33. Verfahren nach Anspruch 20, wobei der Edelmetallkatalysator-Bestandteil in einer Menge von 0,5 bis 3,0 Gramm bezüglich eines Liters des hitzebeständigen Trägers aufgebracht ist.

34. Verfahren nach Anspruch 20, wobei zumindest zwei der Elemente kombiniert in einer kombinierten Menge aufgebracht werden, die zum Reinigen bezüglich NOₓ, CO und HC in Abgasen wirksam ist, deren Sauerstoffkonzentrationen am stöchiometrischen Punkt oder auf einen Wert liegen, der höher ist, als es zum Oxidieren von CO und HC erforderlich ist.

35. Verfahren nach Anspruch 34, wobei zumindest zwei der Elemente kombiniert in einer kombinierten Menge von 0,1 bis 10,0 Gramm bezüglich eines Liters des hitzebeständigen Trägers aufgebracht werden.

36. Verfahren nach Anspruch 35, wobei zumindest zwei der Element kombiniert in einer kombinierten Menge von 0,5 bis 3,0 Gramm bezüglich eines Liters des hitzebeständigen Trägers aufgebracht werden.

37. Verfahren nach Anspruch 20, wobei der Edelmetallkatalysator-Bestandteil aus Pt und Pd ausgewählt wird, wobei die poröse Schicht einen Innenabschnitt, der mit dem hitzebeständigen Trägers in Berührung steht, und einen Außenabschnitt hat, der sich auf dem Innenabschnitt befindet, [zumindest eines von Pt und Pd ist vom Außenabschnitt zum Innenabschnitt in der porösen Schicht gleichmäßig dispergiert,] und Rh auf dem Außenabschnitt in einer großen Menge bezüglich des Innenabschnitts der porösen Schicht aufgebracht ist.

## Revendications

1. Un catalyseur pour l'épuration des gaz d'échappement comprenant :
- un support résistant à la chaleur;
- une couche poreuse appliquée sur ledit support résistant à la chaleur;
- un ingrédient catalytique à base de métal noble, chargé sur ladite couche poreuse et choisi dans le groupe constitué par Pt ou Pd et Rh pour oxyder NO dans les gaz d'échappement en NO₂ pour faire réagir NO₂ avec HC, CO et similaire dans le gaz d'échappement; et
- un composant de stockage des NOₓ comprenant au moins un élément choisi dans le groupe constitué par des métaux alcalino-terreux, éléments de terres rares à l'exclusion du cérium et métaux alcalins et chargé sur ladite couche poreuse à raison de 0,05 à 10,0 moles par litre dudit support résistant à la chaleur ;
dans lequel
- ladite couche poreuse présente une partie interne en contact avec ledit support résistant à la chaleur et une partie externe disposée sur la partie interne,
- ledit ingrédient catalytique à base de métal noble et ledit composant de stockage des NOₓ étant disposés adjacents les uns aux autres afin qu'ils puissent se rencontrer les uns les autres avec une probabilité élevée,
- ledit composant de stockage des NOₓ est dispersé uniformément dans ladite couche poreuse,
- au moins l'un des Pt et Pd est dispersé uniformément de la partie externe à la partie interne dans ladite couche poreuse et
- Rh est chargé en grande quantité sur la partie externe de ladite couche poreuse par rapport à la partie interne.

2. Le catalyseur selon la revendication 1, dans lequel ledit support résistant à la chaleur comporte au moins un élément choisi dans le groupe constitué par un support monolithique formé de cordiérite et un support métallique.

3. Le catalyseur selon la revendication 1, dans lequel ladite couche poreuse comporte au moins un élément choisi dans le groupe constitué en l'alumine, zéolite, zircone, silice-alumine, silice et leurs combinaisons.

4. Le catalyseur selon la revendication 1, dans lequel ledit composant de stockage des NOₓ est au moins un métal alcalino-terreux choisi dans le groupe constitué par le baryum (Ba), strontium (Sr) et calcium (Ca).

5. Le catalyseur selon la revendication 1, dans lequel ledit composant de stockage des NOₓ est au moins un élément des terres rares choisi dans le groupe constitué par le lanthane (La) et l'yttrium (Y).

6. Le catalyseur selon la revendication 1, dans lequel ledit composant de stockage des NOₓ est au moins un métal alcalin choisi dans le groupe constitué par le lithium (Li), le potassium (K) et le sodium (Na).

7. Le catalyseur selon la revendication 1, dans lequel ledit composant de stockage des NOₓ est chargé en une quantité qui est efficace pour stocker l'oxyde d'azote (NOₓ) dans les gaz d'échappement dont les concentrations en oxygène sont au point stoechiométrique ou supérieures à ce qui est nécessaire pour l'oxydation du monoxyde de carbone (CO) et des hydrocarbures (HC).

8. Le catalyseur selon la revendication 7, dans lequel ledit composant de stockage des NOₓ est chargé à une quantité de 0,05 à 1,0 mole par litre dudit support résistant à la chaleur.

9. Le catalyseur selon la revendication 1, dans lequel au moins deux desdits composants de stockage des NOₓ sont chargés en combinaison en une quantité combinée qui est efficace pour stocker le NOₓ dans les gaz d'échappement dont les concentrations en oxygène sont au point stoechiométrique ou supérieures aux quantités nécessaires pour l'oxydation de CO et de HC.

10. Le catalyseur selon la revendication 9, dans lequel au moins deux desdits composants de stockage des NOₓ sont chargés en combinaison en une quantité combinée de 0,05 à 10,0 moles par litre dudit support résistant à la chaleur.

11. Le catalyseur selon la revendication 10, dans lequel au moins deux desdits composants de stockage des NOₓ sont chargés en combinaison en une quantité combinée de 0,05 à 1,0 mole par litre dudit support résistant à la chaleur.

12. Le catalyseur selon la revendication 1, dans lequel ledit ingrédient catalytique à base de métal noble est chargé en une quantité qui est efficace pour épurer NOₓ, CO et HC des gaz d'échappement dont les concentrations d'oxygène sont au point stoechiométrique ou supérieures à ce qui est nécessaire pour l'oxydation de CO et de HC.

13. Le catalyseur selon la revendication 12, dans lequel ledit ingrédient catalytique à base de métal noble est chargé en une quantité de 0,1 à 10,0 g par litre dudit support résistant à la chaleur.

14. Le catalyseur selon la revendication 13, dans lequel ledit ingrédient catalytique à base de métal noble est chargé à raison de 0,5 à 3,0 grammes par litre dudit support résistant à la chaleur.

15. Le catalyseur selon la revendication 1, dans lequel deux au moins desdits éléments sont chargés en combinaison en une quantité combinée qui est efficace pour épurer NOₓ, CO et HC des gaz d'échappement dont les concentrations en oxygène sont au point stoechiométrique ou supérieures à ce qui est nécessaire pour oxyder CO et HC.

16. Le catalyseur selon la revendication 15, dans lequel au moins deux desdits éléments sont chargés en combinaison en une quantité combinée de 0,1 à 10,0 grammes par litre dudit support résistant à la chaleur.

17. Le catalyseur selon la revendication 16, dans lequel au moins deux desdits éléments sont chargés en combinaison en une quantité combinée de 0,5 à 0,3 gramme par litre dudit support résistant à la chaleur.

18. Procédé de fabrication d'un catalyseur selon la revendication 1, dans lequel avant l'application de ladite couche poreuse sur ledit support résistant à la chaleur, au moins un ingrédient catalytique à base de métal noble choisi dans le groupe constitué par Pt et Pd est chargé sur ladite couche poreuse de façon à être uniformément dispersé dans celle-ci.

19. Procédé de fabrication d'un catalyseur selon la revendication 1, dans lequel au moins un ingrédient catalytique à base de métal noble choisi dans le groupe constitué par Pt et Pd est chargé sur ladite couche poreuse par immersion dudit support résistant à la chaleur portant appliqué dessus ladite couche poreuse dans une solution aqueuse de l'ingrédient catalytique à base de métal noble qui est préparée en un volume égal ou inférieur à la capacité de stockage de l'eau présentée par ledit support résistant à la chaleur portant appliquée dessus ladite couche poreuse et par séchage.

20. Un procédé d'épuration d'un gaz d'échappement d'un moteur tournant en régime pauvre comprenant du monoxyde de carbone, des hydrocarbures et des oxydes d'azote en mettant ledit gaz d'échappement d'un engin tournant en régime pauvre en contact avec le catalyseur d'épuration des gaz d'échappement comprenant :
- un support résistant à la chaleur ;
- une couche poreuse appliquée sur ledit support résistant à la chaleur ;
- un ingrédient catalytique à base de métal noble chargé sur ladite couche poreuse en une quantité de 0,1 à 10,0 grammes par litre dudit support résistant à la chaleur et
- un composant de stockage des NOₓ comprenant au moins un élément choisi dans le groupe constitué par les métaux alcalino-terreux, éléments de terres rares à l'exclusion du cérium et des métaux alcalins et chargé sur ladite couche poreuse à raison de 0,05 à 10,0 moles par litre dudit support résistant à la chaleur ;
- ledit ingrédient catalytique à base de métal noble et ledit composant de stockage des NOₓ étant disposés les uns adjacents aux autres de façon à se rencontrer les uns les autres avec une haute probabilité et en étant dispersés uniformément de la partie externe à la partie interne dans ladite couche poreuse,
dans lequel
(1) sous une atmosphère pauvre en carburant dans laquelle les concentrations en oxygène sont égales ou supérieures au point stoechiométrique nécessaire pour l'oxydation des constituants à oxyder dans ledit gaz d'échappement, les oxydes d'azote dudit gaz d'échappement sont oxydés par ledit ingrédient catalytique à base de métal noble et sont stockés dans ledit composant de stockage des NOₓ ;
(2) sous une dite atmosphère réductrice, lorsqu'un rapport air-carburant est ajusté de pauvre en carburant à riche en carburant, en donnant une atmosphère réductrice dans laquelle les concentrations en oxygène desdits gaz d'échappement sont inférieures audit point stoechiométrique, les oxydes d'azote stockés dans ledit composant de stockage des NOₓ sont libérés et réduits chimiquement par une réaction avec les hydrocarbures et le monoxyde de carbone dudit gaz d'échappement.

21. Le procédé selon la revendication 20, dans lequel ledit support résistant à la chaleur comporte au moins un élément choisi dans le groupe constitué par un support monolithique formé de cordiérite et un support métallique.

22. Le procédé selon la revendication 20, dans lequel ladite couche poreuse comprend au moins un élément choisi dans le groupe constitué par l'alumine, zéolite, zircone, silice-alumine, silice et leurs combinaisons.

23. Le procédé selon la revendication 20, dans lequel ledit composant de stockage des NOₓ est au moins un métal alcalino-terreux choisi dans le groupe constitué par le baryum (Ba), strontium (Sr) et calcium (Ca).

24. Le procédé selon la revendication 20, dans lequel ledit composant de stockage des NOₓ est au moins un élément des terres rares choisi dans le groupe constitué par le lanthane (La) et l'yttrium (Y).

25. Le procédé selon la revendication 1, dans lequel ledit composant de stockage des NOₓ est au moins un métal alcalin choisi dans le groupe constitué par le lithium (Li), le potassium (K) et le sodium (Na).

26. Le procédé selon la revendication 20, dans lequel ledit composant de stockage des NOₓ est chargé en une quantité qui est efficace pour stocker l'oxyde d'azote (NOₓ) dans les gaz d'échappement dont les concentrations en oxygène sont au point stoechiométrique ou supérieures à ce qui est nécessaire pour l'oxydation du monoxyde de carbone (CO) et des hydrocarbures (HC).

27. Le procédé selon la revendication 26, dans lequel ledit composant de stockage des NOₓ est chargé à raison de 0,05 à 1,0 mole par litre dudit support résistant à la chaleur.

28. Le procédé selon la revendication 20, dans lequel au moins deux desdits composants de stockage des NOₓ sont chargés en combinaison en une quantité combinée qui est efficace pour stocker NOₓ dans les gaz d'échappement dont les concentrations en oxygène sont au point stoechiométrique ou supérieures à ce qui est nécessaire pour l'oxydation de CO et de HC.

29. Le procédé selon la revendication 28, dans lequel au moins deux desdits composants de stockage des NOₓ sont chargés en combinaison en une quantité combinée de 0,05 à 10,0 moles par litre dudit support résistant à la chaleur.

30. Le procédé selon la revendication 29, dans lequel au moins deux desdits composants de stockage des NOₓ sont chargés en combinaison en une quantité combinée de 0,05 à 1,0 mole par litre dudit support résistant à la chaleur.

31. Le procédé selon la revendication 20, dans lequel ledit ingrédient catalytique à base de métal noble est au moins un élément choisi dans le groupe constitué par Pt, Rh et Pd.

32. Le procédé selon la revendication 20, dans lequel ledit ingrédient catalytique à base de métal noble est chargé en une quantité qui est efficace pour épurer NOₓ, CO et HC dans des gaz d'échappement dont les concentrations en oxygène sont au point stoechiométrique ou supérieures à ce qui est nécessaire pour l'oxydation de CO et de HC.

33. Le procédé selon la revendication 20, dans lequel ledit ingrédient catalytique à base de métal noble est chargé en une quantité de 0,05 à 3,0 grammes par litre dudit support résistant à la chaleur.

34. Le procédé selon la revendication 20, dans lequel au moins deux desdits éléments sont chargés en combinaison en une quantité combinée qui est efficace pour épurer NOₓ, CO et HC des gaz d'échappement dont les concentrations en oxygène sont au point stoechiométrique ou supérieures à ce qui est nécessaire pour l'oxydation de CO et de HC.

35. Le procédé selon la revendication 34, dans lequel au moins deux desdits éléments sont chargés en combinaison en une quantité combinée de 0,1 à 10,0 gammes pour 1 litre dudit support résistant à la chaleur.

36. Le procédé selon la revendication 35, dans lequel deux au moins desdits éléments sont chargés en combinaison en une quantité de 0,5 à 3,0 grammes par litre dudit support résistant à la chaleur.

37. Le procédé selon la revendication 20, dans lequel l'ingrédient catalytique à base de métal noble est choisi parmi Pt et Pd, où ladite couche poreuse a une partie interne en contact avec ledit support résistant à la chaleur et une partie externe disposée sur la partie interne, au moins l'un des Pt et Pd étant dispersé uniformément de la partie externe à la partie interne dans ladite couche poreuse et Rh est chargé en une quantité importante sur la partie externe par rapport à la partie interne de ladite couche poreuse.
